(19) Europäisches Patentamt / European Patent Office / Office européen des brevets

(11) **EP 4 426 988 B1**

(12) **EUROPEAN PATENT SPECIFICATION**

(45) Date of publication and mention
of the grant of the patent:
**25.02.2026 Bulletin 2026/09**

(21) Application number: **22801878.4**

(22) Date of filing: **23.09.2022**

(51) International Patent Classification (IPC):
**F28D 7/10** *(2006.01)*     **F28F 13/12** *(2006.01)*
**F28F 1/00** *(2006.01)*

(52) Cooperative Patent Classification (CPC):
**F28F 1/003; F28D 7/106; F28D 21/0012;
F28F 13/12;** F24D 2200/20; Y02B 30/56

(86) International application number:
**PCT/IB2022/059036**

(87) International publication number:
**WO 2023/111701 (22.06.2023 Gazette 2023/25)**

(54) **VERTICAL HEAT RECOVERY SYSTEM**

**VERTIKALES WÄRMERÜCKGEWINNUNGSSYSTEM**

**SYSTÈME DE RÉCUPÉRATION DE CHALEUR VERTICAL**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.12.2021 PT 2021117634**

(43) Date of publication of application:
**11.09.2024 Bulletin 2024/37**

(73) Proprietor: **Zypho, S.A.**
**4400-039 Vila Nova de Gaia (PT)**

(72) Inventor: **GARCIA MELIÇO, José Alberto**
**2825-461 COSTA DE CAPARICA (PT)**

(74) Representative: **Couto, Cláudia
Clarke, Modet Portugal
Av. Casal Ribeiro, 50 - 3º Dto.
1000-093 Lisboa (PT)**

(56) References cited:
**WO-A1-2009/060487       NL-C1- 1 020 677
US-A1- 2008 000 616       US-A1- 2012 318 483
US-A1- 2013 306 290**

## Description

### Technical field

This application relates to a vertical heat recovery system for drains. WO 2009/060487 A1 discloses a vertical heat recovery system having a corrugated internal pipe and a turbulator.

### Background art

According to the European Commission, buildings are responsible for approximately 40 percent of energy consumption and 36 percent of $CO_2$ emissions in the European Union. Renovation and improved energy efficiency have the potential to lead to significant energy and $CO_2$ emission savings. Over recent years, the energy needed to produce hot water has become an ever-larger share of total household energy use at home due to the dramatic fall in energy required for domestic space heating. Every day, more than 22,000,000 $m^3$ of hot water are consumed by European homes alone. It is the main source of energy consumption for new housing, and yet 80 percent of this heat ends up in sewers and is wasted. Considering 80 percent of hot water is used in showers, harvesting heat from shower drains could be a simple way to save at least 40 percent of energy and $CO_2$ emissions.

A wastewater heat recovery (WWHR) system can effectively recapture and reuse instantly up to 70 percent of the energy lost into the drain, reducing energy consumption in a cost-effective manner. It is a simple system, with no moving parts, no storage, no control system and requires no electricity to operate. A specifically engineered heat exchanger transfers heat energy from the waste hot shower water to the incoming fresh water supply, warming it from around 10 up to 30°C. When the cold water arrives at the mixing valve, it is much warmer, and therefore substantially less hot water is required from the water heater or solar array. Efficiency, as a percentage of energy gained from drain water, varies by systems used, up to the value of 70 percent. WWHR systems can be used in single-and multi-family homes, and non-residential premises with higher hot water consumption: sports facilities, hairdressers, hotels and swimming pools. Due to ease of installation, they can be applied in renovations as well.

Europe has the greatest technological lead in the world on WWHR, with 326 patent applications since 2010, representing 70 percent of all patent applications in the world. Installed WWHR systems have already recovered 300 GWh corresponding to the annual domestic hot water consumption of 17,000 households.

In 2017, EU-28 domestic sanitary hot water accounted for 495 TWh energy which represents 14.8 percent of household final energy consumption (3,343,52 TWh). 80 percent of household hot water is used in showers, and shower water accounts for 396 TWh/year energy, or 3.2 percent of the EU-28 final energy consumption (12,329,08 TWh).

Providing the required energy for a bath/shower mostly from fossil fuels in EU-28 leads to a high carbon footprint with emission of over 75 million tonnes $CO_2$ annually from electricity and gas alone. Assuming that the heat source is not changed, around 40 percent of these $CO_2$ emissions (i.e., 30.28 million tonnes) could be avoided by deploying WWHR systems.

One of the major points is to build solutions that don't use any power source but the heat transfer by itself, being able to fit the standards of the construction, like allowed height, thickness, water connections, water pressure and also, fulfil all required certifications, according to each country. Keeping the Drain water tubes clean is also a challenge, to keep the efficiency rates.

The most common Drain Heat Exchanger are the Vertical Pipes, that reach around 2m tall, manufactured with plain copper tube for the heat transfer. Smaller lengths provide less efficiencies. There are few solutions in the market and all very similar.

### Summary

The invention defines a vertical heat recovery system (1) for drains suitable for recovering heat from drain water to mains water, comprising:

- an external pipe (2) for mains water comprising a first mains water passage (2.1) arranged at a top section (10) of the system (1), and a second mains water passage (2.2) arranged at a bottom section (11) of the system (1);
- an internal pipe (3) for drain water arranged inside the external pipe (2),

    wherein the internal pipe (3) comprises a corrugated geometry, and
    wherein the internal pipe (3) comprises at least one corrugated wall (3.1);
    wherein the internal pipe (3) further comprises a second corrugated wall (3.2);
    - a first drain water passage (4) arranged at the top section (10) of the system (1);
    - a second drain water passage (5) arranged at the bottom section (11) of the system (1);

- at least one turbulator (6) arranged on the external surface of the internal pipe (3);

- at least two bolts (8) arranged in the external pipe (2);
wherein the system (1) further comprises a leak detection system arranged in the top section (10) or arranged on the bottom section (11), the leak detection system comprising:

a sealant element (7) between the first drain water passage (4) and the internal pipe (3), or a sealant element (7) between the second drain water passage (5) and the internal pipe (3);
at least one hole (3.3) on the second corrugated wall (3.2) of the internal pipe (3) arranged above the sealant element (7) or arranged below sealant element (7); and
a leaked water channel (LW) arranged between the first drain water passage (4) and the external pipe (2) or arranged between the second drain water passage (5) and the external pipe (2).

In one embodiment, the external pipe (2) further comprises a third mains water passage (2.3) arranged between the first and second mains water passages (2.1, 2.2).

In one embodiment, the system (1) comprises an air break to drain system (9) arranged at the bottom section (11) at the second drain water passage (5), and comprises a drain water inlet (12), a drain water outlet (13) and at least one lateral discharge outlet (14).

In one embodiment, the corrugated geometry of the internal pipe (3) is a wave shape.

In one embodiment, the corrugated geometry of the internal pipe (3) is a helicoidal shape.

In one embodiment, the internal pipe (3) is made of a material selected from stainless steel or copper.

In one embodiment, the external pipe (2) is made of a material selected from polyvinyl chloride, Acrylonitrile Butadiene Styrene, Polypropylene, Stainless steel, Copper.

In one embodiment, the turbulator (6) is made of stainless steel, copper or polymer.

In one embodiment, the turbulator is a C-shaped turbulator comprising holes (6.1).

In one embodiment, the turbulator is a helicoidal turbulator (6.2).

The present invention also relates to the use of the vertical heat recovery system (1) in a drain associated with a shower, a bath, a washing machine, a pool, a sink, a wash basin, a bidet or a hairdresser wash basin.

**General Description**

It is the object of the present application to provide a system for drains, that is able to recover the heat from the water that flows in the drain, which is used hot water, and transfer its heat to mains water, which is clean water, thus improving heat and energy recovery and maximizing energy efficiency of daily tasks such as showering.

The present invention relates to a vertical heat recovery system that comprises an external pipe for mains water, an internal pipe for drain water that is arranged inside the external pipe, wherein the internal pipe comprises at least one wall and has a corrugated geometry.

The vertical heat recovery system is suitable for drains associated with a shower, a bath, a washing machine, a pool, a sink, a wash basin, a bidet, a hairdresser wash basin, and similar.

Drain water enters the vertical heat recovery system through a first drain water passage arranged at the top section of the vertical heat recovery system or, optionally, drain water can enter through a second drain water passage arranged at the bottom section of the vertical heat recovery system.

In one aspect of the present invention, the drain water can enter the vertical heat recovery system through the first drain water passage arranged at the top section of the system and flows downwards inside the internal pipe, due to gravity, and exits through the second drain water passage arranged at the bottom section of the vertical heat recovery system and is directed to the sewer system. In this embodiment, the vertical heat recovery system is suitable to be installed in the floor below the drain.

In another aspect of the present invention, the drain water can enter the vertical heat recovery system through the second drain water passage arranged at the bottom section of the system and flows upwards, against gravity, inside the internal pipe due to being pumped, by means of a pump device, and exits through the first drain water passage arranged at the top section of the vertical heat recovery system and is directed to the sewer system. This embodiment is suitable for ground floor installations, where the vertical heat recovery system cannot be installed below the drain and is installed on the same floor as the drain, thus a pump device allows the drain water to flow in the system against gravity.

In yet another aspect of the present invention, the drain water can enter the vertical heat recovery system through the first drain water passage arranged at the top section of the system, wherein the drain water is directed to the top section of the system by means of a pump device. The drain water flows downwards, due to gravity, inside the internal pipe and exits through the second drain water passage arranged at the bottom section of the vertical heat recovery system and is directed to the sewer system. This embodiment is more suitable for ground floor houses or buildings, where the vertical heat recovery system cannot be installed immediately below the drain and is installed on the same floor as the drain, thus a pump device allows the drain water to flow in the system against gravity.

Meanwhile, mains water can enter the vertical heat recovery system through a second mains water passage arranged at the bottom section of the system, flows upwards in a space between the external pipe and the internal pipe, and exits at the first mains water passage arranged at the top section of the system. Optionally, the mains water can enter the vertical heat recovery system through the first mains water passage arranged at the top section of the system, flows downwards in the space between the external pipe and the internal pipe, and exists at the second mains water passage arranged at the bottom section of the system.

Thus, in one embodiment, the mains water flows in the vertical heat recovery system countercurrent to the drain water.

In another embodiment, the mains water flows in the vertical heat recovery system in the same direction as the drain water.

Optionally, to reduce mains water pressure drop, it can enter through the top and bottom mains water passage and exit the vertical heat recovery system through a third mains water passage.

Since the internal pipe of the vertical heat recovery system is corrugated, the heat transfer area is increased, it maximizes the uniformity of the drain water flow film thickness along the system and this shape also creates turbulent flow conditions.

The corrugated geometry allows the internal pipe to have higher mechanical resistance and therefore the wall can be thinner in comparison to smooth pipes. With a thinner wall the heat/energy recovery efficiency is higher.

The mains water that flows inside the system is forced to flow in an optimized corrugated path, thus increasing the efficiency of heat transfer and energy recovery from the drain water that flows inside the internal pipe and the mains water flowing in the space between the external and internal pipes.

The drain water, which is heated, flows inside the internal pipe and also follows the optimized corrugated path, creating turbulent flow conditions of drain water thus maximizing heat transfer and the uniformity of the drain water flow film thickness along the system.

The corrugated geometry of the internal pipe also aids in the auto-cleaning of the pipe. The drain water flows as a film and collides with the corrugation of the internal pipe which cause resistance to the drain water flow, thus the resulting tension of water against the corrugation maintains the pipe clean.

The system of the present invention further comprises at least one turbulator to achieve turbulent flow conditions.

The turbulator can be a C-shaped element comprising holes. A plurality of C-shaped turbulators can be arranged along the length of the external surface of the internal pipe and inserted in the corrugated shape of the pipe.

The C-shaped turbulator presents the following advantages:

- due to its C shape and the presence of holes, it optimizes the turbulence of the mains water that flows upwards in the space between the external pipe and internal pipe;
- the holes reduce the pressure between the external and the internal pipes;
- reduces the dead zones between the two pipes, which are areas susceptible to accumulate stagnated mains water which can lead to the growth of bacteria, such as *Legionella.* The holes allow to maximize the heat recovery area;
- the holes reduce the mains water pressure drop that might be caused by the use of the C-shaped turbulator;
- helps guiding the path of the mains water to make the water path longer, increasing useful heat transfer length and thus more efficient.

Alternatively, the turbulator is a helicoidal element that is arranged along the length of the external surface of the internal pipe and inserted in the corrugated shape of the pipe. The helicoidal turbulator presents the following advantages:

- forces the mains water to circulate in a spiral path in the space between the external pipe and internal pipe and helps guiding the path of the mains water to make the water path longer, increasing useful heat transfer length and thus more efficient;
- the length and thickness of the helicoidal turbulator can be optimized and adjusted to compensate the manufacturing variations of the diameter of the external and internal pipe;
- optimizes the turbulence of the clean water;
- uniformizes the temperature gradient of the mains and drain water along the heat exchanger full length;
- reduces the dead zones between the two pipes;
- optimize the water pressure drop.

For the purpose of the present application, the internal surface of the internal pipe is defined as the surface that is inside the pipe and in contact with drain water. The external surface of the internal pipe is defined as the surface that is on the outside of the pipe and in contact with mains water.

The internal surface of the external pipe is defined as the surface that is on the inside of the pipe and in contact with mains water. The external surface of the external pipe is defined as the surface that is on the outside of the pipe and in contact with the environment.

The system of the present invention further comprises at least two bolts arranged in the external pipe configured to increase the axial resistance of the bond between the external pipe and internal pipe.

The system of the present invention comprises a leak detection system for the embodiment where the internal pipe comprises two walls, a first and a second corrugated wall. The leak detection system is provided in the system in case there is a damage in the internal pipe. In case of damage of the first or second corrugated wall of the internal pipe, the mains water might be able to access the space between the two walls of the internal pipe and flow in that space.

A sealant element is provided either in the top section of the internal pipe or the bottom section of the internal pipe, arranged between the internal pipe and the drain water passage pipe, and at least one hole is provided in the second corrugated wall of the internal pipe configured to allow the water to exit either at the top section of the system or the bottom section of the system depending on where the leak detection system is arranged. In this manner, any leaked mains water will be detectable and visible from the outside of the heat recovery system and mixture between mains water and drain water is avoided even in the circumstances of a sewage backflow phenomenon.

The system of the present invention optionally comprises an air break to drain system arranged at the bottom section of the vertical heat recovery system. The air break to drain system can be used when the internal pipe comprises one wall or two walls.

The air break to drain system prevents backflow of drain or sewage water up to vertical heat recovery system, thus avoiding the backflow contaminated water to never reach the internal pipe and only having a single or double wall separating mains water to the contaminated water. In case of drain or sewage water backflow, the refluxed water exits the air break to drain system laterally through outlets and is unable to reach the heat exchanger. This air break to drain system prevents any risk of backflow contamination when there is one or two walls in the internal pipe that separates the mains water from drain water or wastewater.

The vertical heat recovery system of the present application is an ideal solution to recover heat from drain water, which otherwise would be lost, and redirect that heat to mains water that will be used. Thus, the system allows to save energy to heat water. This type of system is passive. The recovered energy is automatically redirected to where the pre-heated mains water is needed.

Having in mind that the apartment/house/building height cannot increase and that the higher length of a tube results in a better efficiency, the applicants looked for solutions that could increase the tube's surface to achieve higher efficiency rates. For example, if the internal pipe of the vertical heat recovery system has more than 5m in length it can be corrugated until it's downsized to 2m in length. So, even with a 2m length pipe, the water will flow around 5m long inside the pipe, increasing the efficiency without increasing the external vertical heat recovery system size. Also, if stainless-steel is used for the corrugated pipe a lower thickness can be used, which also increases efficiency. Another important issue to be solved was that the corrugated tube increases water turbulence which contributes for the "auto-cleaning" of the pipe.

**Brief description of drawings**

For easier understanding of this application, figures are attached in the annex that represent the preferred forms of implementation which nevertheless are not intended to limit the technique disclosed herein.

Figure 1 shows the vertical heat recovery system (1) of the present invention, Figure A shows the system front view and

Figure B shows the system along a side view, and Figure C shows another embodiment of the system (1).

Figure 2 shows the vertical cross-section A from Figure 1A of the vertical heat recovery system (1).

Figure 3A and 3B shows the turbulators of the present invention.

Figure 4A shows a vertical cross-section A of the vertical heat recovery system (1) shown in Figure 1A.

Figure 4B shows the internal pipe of the vertical heat recovery system (1) showing C-shaped turbulators.

Figure 5A shows a vertical cross-section C of the vertical heat recovery system (1) shown in Figure 1B.

Figure 5B shows a detailed view of section D of Figure 5A.

Figure 6 shows a vertical cross-section A of the vertical heat recovery system (1) shown in Figure 1A.

Figure 7 shows a vertical cross-section A of the vertical heat recovery system (1) shown in Figure 1A.

Figure 7B shows a detailed view of the two walls of the internal pipe of the vertical heat recovery system (1).

Figure 8 shows another detailed view of the two walls of the internal pipe of the vertical heat recovery system (1).

Figure 9 shows the internal pipe comprising an helicoidal turbulator.

Figure 10 shows cross-section detailed view of the corrugated wall of the internal pipe of the vertical heat recovery system (1).

Figure 11 shows the air break to drain system (9).

Figure 12 shows the vertical heat recovery system (1) comprising an air break to drain system (9).

Figure 13 shows the internal pipe corrugated in a helicoidal shape.

## Description of embodiments

Now, preferred embodiments of the present application will be described in detail with reference to the annexed drawings. However, they are not intended to limit the scope of this application.

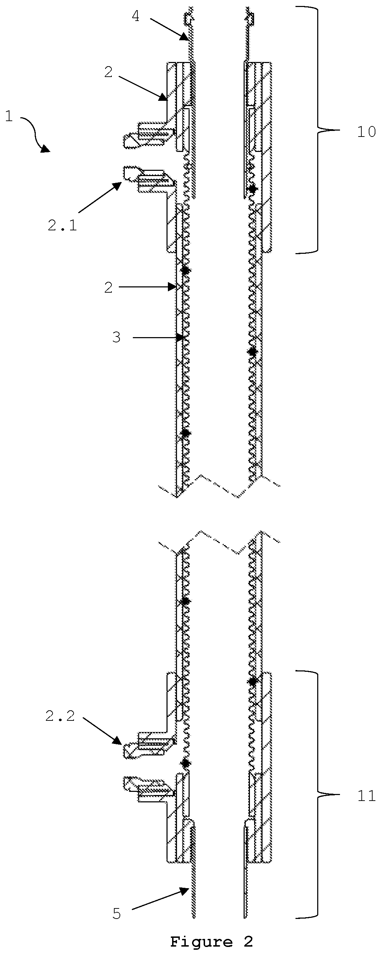

Figures 2 shows an embodiment of the vertical heat recovery system (1) that is not part of the scope of claim 1.

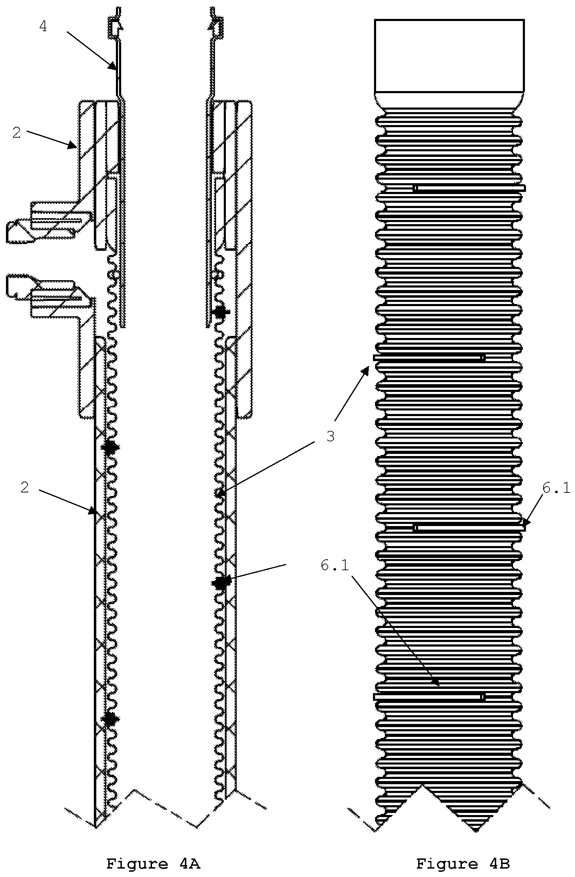

Figures 4 to 6 show the invention disclosed in the present application, for example features such as at least one turbulator (6), sealant element (7) and at least two bolts (8) are shown in these figures. However, the scale of these figures does not allow to see all the technical features of the invention according to claim 1.

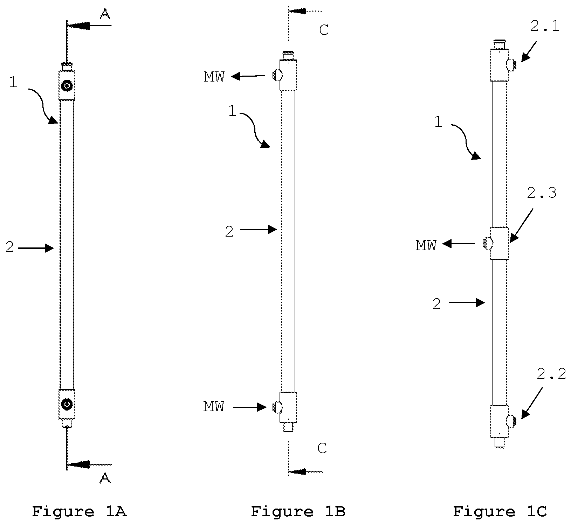

Figures 1A, B and C show the vertical heat recovery system (1).

The present invention relates to a vertical heat recovery system (1) that comprises an external pipe (2) for mains water, an internal pipe (3) for drain water (DW) arranged inside the external pipe (2), wherein the internal pipe (3) has a corrugated geometry, as shown in Figures 1 and 2. The system (1) further comprises two drain water passages (4) (5), the first drain water passage (4) arranged at the top section (10) of the system (1) and the second drain water passage (5) arranged at the bottom section (11) of the system (1), as shown in Figure 2 and 4A.

The external pipe (2) comprises a first mains water passage (2.1) arranged at the top section (10) of the vertical heat recovery system (1) and a second mains water passage (2.2) arranged at the bottom section (11) of the vertical heat recovery system (1), as shown in Figure 2. In one embodiment, the external pipe (2) further comprises a third mains water passage (2.3) arranged between the first and second mains water passages (2.1, 2.2), as shown in Figure 1C.

In one embodiment, the mains water (MW) can enter the vertical heat recovery system (1) through the second mains water passage (2.2) in the bottom section (11), flows in a space between the external pipe (2) and the internal pipe (3), and exits at the top section (10) through the first mains water passage (2.1), as shown by the arrows of Figure 1B.

In another embodiment, the mains water can enter the vertical heat recovery system (1) through the first mains water passage (2.1), flows in a space between the external pipe (2) and the internal pipe (3), and exits at the bottom section (11) through the second mains water passage (2.2).

The external pipe (2) is made of a material selected from, but not limited to, polyvinyl chloride (PVC), Acrylonitrile Butadiene Styrene (ABS), Polypropylene (PP), Stainless steel, Copper.

In one embodiment, the interior surface of the external pipe (2) is smooth. In another embodiment, the interior surface of the external pipe (2) is corrugated in a helicoidal shape.

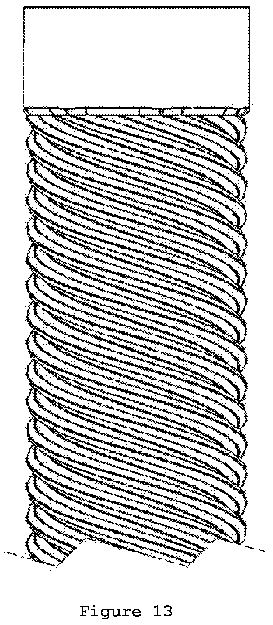

The internal pipe (3) comprises a corrugated geometry. In one embodiment the corrugated geometry is a wave shape, as shown in Figure 2 and Figure 4A and 4B. In another embodiment, the corrugated geometry is a helicoidal shape, as shown in Figure 13.

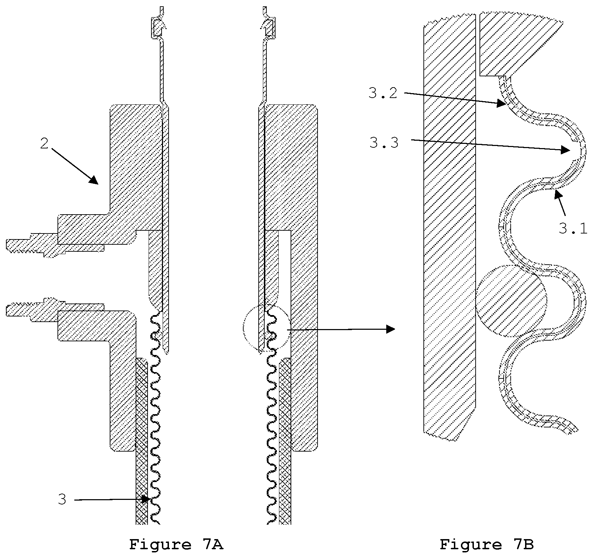

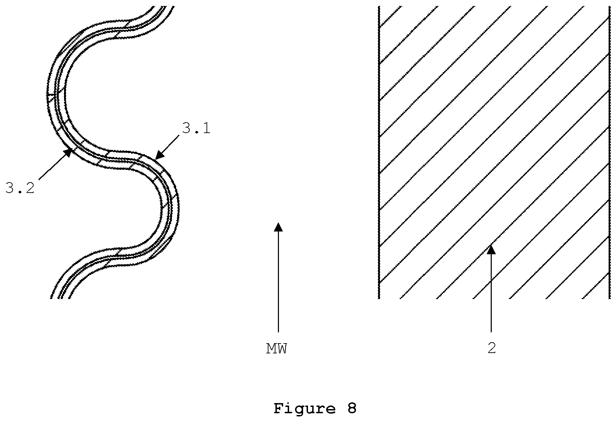

The internal pipe (3) is flexible and comprises at least one corrugated wall (3.1), as shown in Figure 2. In one embodiment, the internal pipe (3) comprises a first corrugated wall (3.1) and a second corrugated wall (3.2), as shown in Figures 7B and 8. The first and second corrugated walls (3.1) (3.2) are arranged against each other. In the embodiment comprising the second corrugated wall (3.2), this wall is arranged on the side of contact with the drain water.

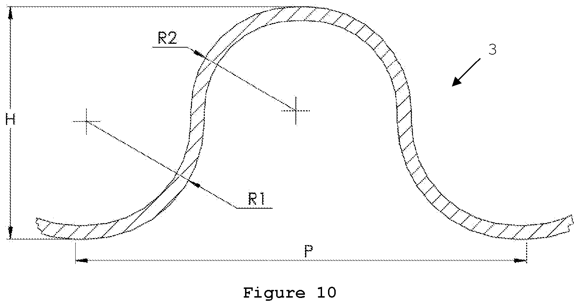

In one embodiment, the internal pipe (3) has a corrugated shape with a wave with parameters configured as shown in Figure 10 and table 1.

Table 1. Parameters of the corrugated wave of the internal pipe (3).

|  |  | Min. [mm] | Max. [mm] |
|---|---|---|---|
| Height | H | 3 | 15 |
| Pitch | P | 4 | 16 |
| Upper Corrugated Wave Radius | R2 | 1.5 | 25 |
| Bottom Corrugated Wave Radius | R1 | 1.5 | 25 |

In one embodiment, the internal pipe (3) is made of a material selected from, but not limited to, stainless steel, or copper.

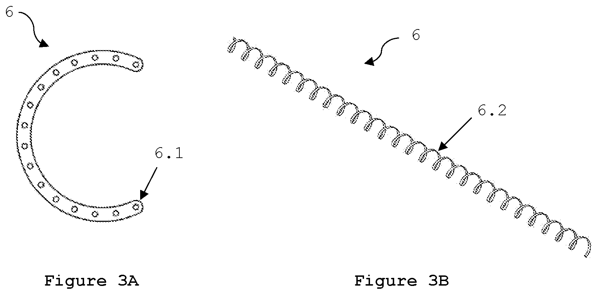

The vertical heat recovery system (1) further comprises at least one turbulator (6) arranged on the external surface of the internal pipe (3) and configured to optimize the turbulence of mains water, as shown in Figure 3A and 3B. In one embodiment the turbulator (6) is made of stainless steel, copper or polymer.

In one embodiment, the turbulator is a C-shaped turbulator (6.1) comprising holes as shown in Figure 3A. A plurality of C-shaped turbulators (6.1) are arranged and distributed along the length of the external surface of the internal pipe (3) and inserted in the corrugated shape of the internal pipe (3), as shown in Figures 4A and 4B.

In one embodiment, the plurality of C-shaped turbulators (6.1) are arranged in the external surface of the internal pipe (3) with seventeen C-shaped turbulators (6.1) per each meter length of the internal pipe (3).

In another embodiment, the plurality of C-shaped turbulators (6.1) are arranged in an internal pipe (3) comprising a wave geometry, with one C-shaped turbulator (6.1) arranged between every seven or eight waves.

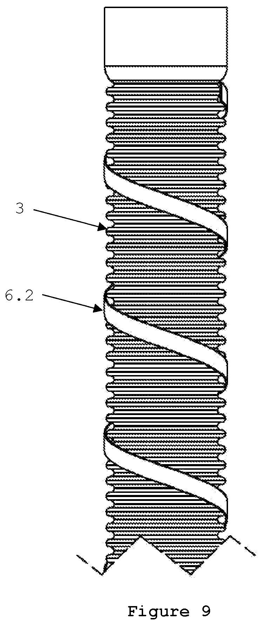

In another embodiment, the turbulator (6) is a helicoidal turbulator (6.2), as shown in Figure 3B, that is arranged along the length of the external surface of the internal pipe (3), as shown in Figure 9.

The helicoidal shape of the turbulator (6.2) is configured to help center the internal pipe (3) inside the external pipe (2) and maximize the mains water turbulence flow conditions.

The parameters to define the external pipe (2) and internal pipe (3) are as shown in Table 2.

Table 2. Parameters of the external pipe (2) and internal pipe (3) and turbulators (6).

|  | Internal pipe (3) [cm] | External pipe (2) [cm] | |
|---|---|---|---|
|  | Ø external | Ø internal | Ø external |
| Min. | 3.8 | 4.2 | 5 |
| Max. | 9.2 | 9.2 | 10 |

|  | C-Shaped turbulator (6.1) [cm] | Helicoidal turbulator (6.2) [cm] | | |
|---|---|---|---|---|
|  | Height: | Length: | Thickness: | Width: |
| Min. | 0.4 | 200 | 0.04 | 0.4 |
| Max. | 0.8 | 500 | 0.15 | 1.5 |

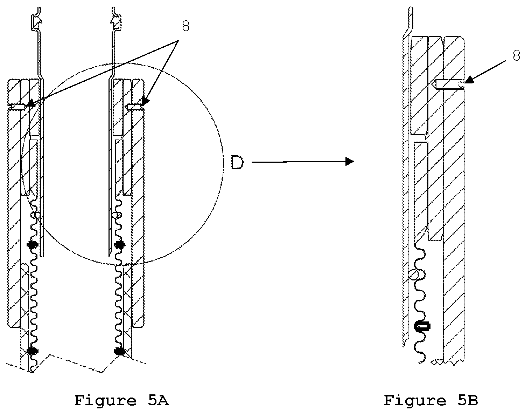

The vertical heat recovery system (1) further comprises at least two bolts (8), as shown in Figures 5A and 5B, arranged in the external pipe (2) configured to increase the axial resistance of the bond between the external pipe (2) and internal pipe (3). In one embodiment, the at least two bolts (8) are arranged on the top section (10) and at least two bolts (8) are arranged in the bottom section (11) of the vertical heat recovery system (1), as shown in Figures 5A and 5B.

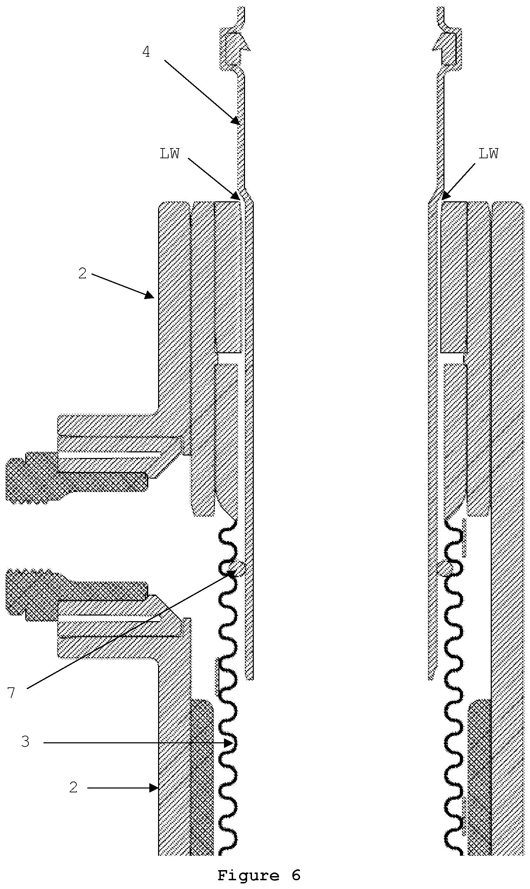

According to the invention, the vertical heat recovery system (1) further comprises a leak detection system when the internal pipe (3) comprises two walls, a first corrugated wall (3.1) and a second corrugated wall (3.2), such as seen in Figures 6 and Figures 7A and 7B.

In case the first corrugated wall (3.1) is damaged, which is in direct contact with mains water, the mains water is able to access the space between the two walls (3.1, 3.2) of the internal pipe (3) and flow in that space.

The leak detection system allows to know if one of the walls (3.1, 3.2) has been compromised. This system allows to avoid an accidental mixture of mains water with drain water.

In one embodiment, the leak detection system is arranged in the top section (10) of the system (1), as shown in Figure 6. In another embodiment, the leak detection system is arranged in the bottom section (11) of the system (1).

In one embodiment, the leak detection system comprises a sealant element (7) arranged on the internal pipe (3), between the first drain water passage (4) and the internal pipe (3), as shown in Figures 6, 7A and 7B, when the leak detection system is arranged in the top section (10). In this embodiment, a portion of the first drain water passage (4) is inserted inside the internal pipe (3).

According to the invention, the leak detection system comprises a sealant element (7) arranged on the internal pipe (3), between the second drain water passage (5) and the internal pipe (3) when the leak detection system is arranged in the bottom section (11). In this embodiment, a portion of the second drain water passage (5) is inserted inside the internal pipe (3).

In one embodiment, the sealant element (7) is an o-ring.

At least one hole (3.3) is provided on the second corrugated wall (3.2) of the internal pipe (3) in a section of the pipe above the sealant element (7) in the embodiment where the leak detection system is arranged in the top section (10), as shown in Figures 6, 7A and 7B. In the embodiment where the leak detection system is arranged in the bottom section (11) there is at least one hole (3.3) provided on the second corrugated wall (3.2) in a section of the pipe below the sealant element (7).

Said at least one hole (3.3) is configured to drain the mains water and allow it to exit at the top section (10) of the system and the internal pipe (3) in a space between the first drain water passage (4) and the external pipe (2) forming a leaked water channel (LW) (i.e. is arranged between the first drain water passage (4) and the external pipe (2)), as shown in Figure 6, in the embodiment where the leak detection system is arranged in the top section (10).

Said at least one hole (3.3) is configured to drain the mains water and allow it to exit at the bottom section (11) of the internal pipe (3) in a space between the second drain water passage (5) and the external pipe (2) forming the leaked water channel (LW) (i.e. is arranged between the second drain water passage (5) and the external pipe (2)) in the embodiment where the leak detection system is arranged in the bottom section (11).

In this manner, any leaked mains water will be detectable and visible from the outside of the vertical heat recovery system (1) and accidental contact between mains water and drain water is avoided, thus avoiding contamination of the mains water and any leak is detected before there is any risk of mains water contamination.

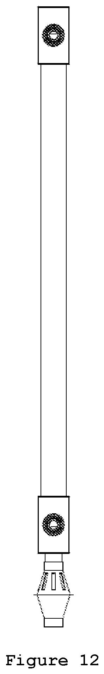

In one embodiment, the vertical heat recovery system (1) can optionally comprise an air break to drain system (9) arranged at the bottom section (11) of the vertical heat recovery system (1). In one embodiment, the air break to drain system (9) is arranged at the second drain water passage (5), as shown in Figure 12.

The air-break system (9) is used when the internal pipe (3) comprises two walls (3.1,3.2).

With regard to protections against the entry of foreign substances into drinking/mains water installations and hot tap water installations placed in the connection of (hazardous) appliances, there are a plurality of norms and standards that must be complied with depending on the country where system of the present invention is installed and used.

As an example, Article 3.8 of NEN 1006: 2015 by Royal Netherlands Standardization Institute (NEN), specifies the features that devices or systems in this technical field need to comprise and the standards the devices or systems need to comply to prevent reflux of secondary waters (sewer waters) .

The air break to drain system (9) of the present invention can be included in the backflow protection category of DC type, aerator without movable parts, as set forth by the NEN 1006: 2015 norm.

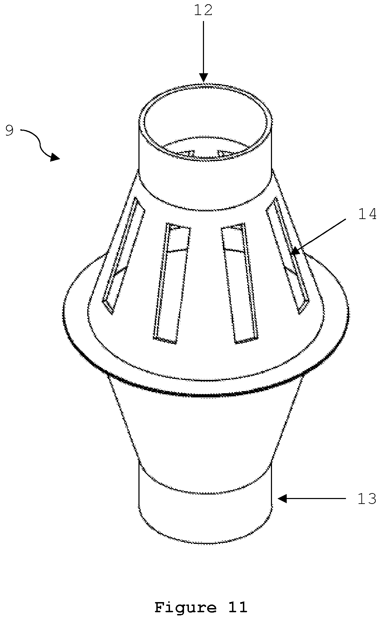

In one embodiment, the air break to drain system (9) comprises a pipe cross configuration as shown in Figure 11, comprising a drain water inlet (12), a drain water outlet (13) and at least one lateral discharge outlet (14). The drain water inlet (12) is arranged in the second drain water passage (5).

In one embodiment, the area, height, and width of discharge outlets (14) can obey norm EN 1717:2000.

In case of drain or sewage water backflow, the refluxed water exits the air break to drain system (9) laterally through the lateral discharge outlets (14) and is unable to reach the section of the internal pipe (3) where mains water operates.

In one embodiment the drain water enters the vertical heat recovery system (1) through a first drain water passage (4) arranged at the top section (10) of the system (1) and flows downwards inside the internal pipe (3) due to gravity and exits through the second drain water passage (5) arranged at the bottom section (11) of system (1) and is directed to the sewer system.

In another embodiment the drain water enters the vertical heat recovery system (1) through the second drain water passage (5) arranged at the bottom section (11) of the system (1) and flows upwards, against gravity, inside the internal pipe (3) due to being pumped by means of a pump device (not shown), and exits through the first drain water passage (4) arranged at the top section (10) of the system (1) and is directed to the sewer system.

Efficiency of heat recovery:

Table 3 shows the results of heat recovery efficiency for an experiment in the following conditions:

| Internal Pipe [cm] | |
|---|---|
| Length | 194 |
| Internal Diameter | 5.28 |
| External Diameter | 6.13 |
| External Pipe [cm] | |
| Length | 194 |
| Internal Diameter | 6.32 |
| External Diameter | 7.5 |
| Internal Pipe Corrugated Wave [cm] | |
| Height | 0.425 |
| Pitch | 0.1191 |
| Radius 1 | 0.2 |
| Radius 2 | 0.2 |
| Turbulator Type [cm] | |
| Length | 500 |
| Thickness | 0.064 |
| Width | 0.954 |

Table 3. Initial temperature conditions

| | Value °C | Tolerance °C |
|---|---|---|
| T Environmental | 20 | ±3 |
| T In | 10 | ±1 |
| T Shower | 40 | ±1 |

According to formula:

$$\epsilon(\%) = \frac{T_{OUT} - T_{IN}}{T_{SH} - T_{IN}} * 100\%$$

Table 4 shows the results of heat recovery efficiency.

Tolerance of the efficiency results: ± 5 P.P. (percentage points) or NTA 8800:2020, Appendix U

Table 4. Efficiency results

| Flow (L/min) | Efficiency (%) |
|---|---|
| 5.8 ± 0.2 | 75 |
| 9.2 ± 0.2 | 70 |
| 12.5 ± 0.2 | 65 |

Reference numbers:

1 - vertical heat recovery system
2 - external pipe

2.1 - first mains water passage
2.2 - second mains water passage
2.3 - third mains water passage
3 - internal pipe
3.1 - first corrugated wall
3.2 - second corrugated wall
3.3 - hole
4 - first drain water passage
5 - second drain water passage
6 - turbulator
6.1 - C-shaped turbulator
6.2 - helicoidal turbulator
7 - sealant element
8 - bolt
9 - air break to drain system
10 - top section of the system
11 - bottom section of the system
12 - drain water inlet
13 - drain water outlet
14 - lateral discharge outlet
MW - mains water
DW - drain water
LW - leaked water

## Claims

1. A vertical heat recovery system (1) for drains suitable for recovering heat from drain water to mains water, comprising:

  - an external pipe (2) for mains water comprising a first mains water passage (2.1) arranged at a top section (10) of the system (1), and a second mains water passage (2.2) arranged at a bottom section (11) of the system (1);
  - an internal pipe (3) for drain water arranged inside the external pipe (2),

     wherein the internal pipe (3) comprises a corrugated geometry, and
     wherein the internal pipe (3) comprises at least one corrugated wall (3.1);
     wherein the internal pipe (3) further comprises a second corrugated wall (3.2);

  - a first drain water passage (4) arranged at the top section (10) of the system (1);
  - a second drain water passage (5) arranged at the bottom section (11) of the system (1);
  - at least one turbulator (6) arranged on the external surface of the internal pipe (3);
  - at least two bolts (8) arranged in the external pipe (2); wherein the system (1) further comprises a leak detection system arranged in the top section (10) or arranged on the bottom section (11), the leak detection system comprising:

     a sealant element (7) between the first drain water passage (4) and the internal pipe (3), or a sealant element (7) between the second drain water passage (5) and the internal pipe (3);
     at least one hole (3.3) on the second corrugated wall (3.2) of the internal pipe (3) arranged above the sealant element (7) or arranged below sealant element (7); and
     a leaked water channel (LW) arranged between the first drain water passage (4) and the external pipe (2) or arranged between the second drain water passage (5) and the external pipe (2).

2. Vertical heat recovery system (1) according to claim 1, wherein the external pipe (2) further comprises a third mains water passage (2.3) arranged between the first and second mains water passages (2.1, 2.2).

3. Vertical heat recovery system (1) according to any the previous claims, wherein the system (1) comprises an air break to drain system (9) arranged at the bottom section (11) at the second drain water passage (5), and comprises a drain water inlet (12), a drain water outlet (13) and at least one lateral discharge outlet (14).

4. Vertical heat recovery system (1) according to any of the previous claims, wherein the corrugated geometry of the internal pipe (3) is a wave shape.

5. Vertical heat recovery system (1) according to any of claims 1 to 3, wherein the corrugated geometry of the internal pipe (3) is a helicoidal shape.

6. Vertical heat recovery system (1) according to any of the previous claims, wherein the internal pipe (3) is made of a material selected from stainless steel or copper.

7. Vertical heat recovery system (1) according to any of the previous claims, wherein the external pipe (2) is made of a material selected from polyvinyl chloride, Acrylonitrile Butadiene Styrene, Polypropylene, Stainless steel, Copper.

8. Vertical heat recovery system (1) according to any of the previous claims, wherein the turbulator (6) is made of stainless steel, copper or polymer.

9. Vertical heat recovery system (1) according to any of the previous claims, wherein the turbulator is a C-shaped turbulator comprising holes (6.1).

10. Vertical heat recovery system (1) according to any of the claims 1 to 8, wherein the turbulator is a helicoidal turbulator (6.2).

11. Use of the vertical heat recovery system (1) described in any of claims 1 to 10, in a drain associated with a shower, a bath, a washing machine, a pool, a sink, a wash basin, a bidet or a hairdresser wash basin.

**Patentansprüche**

1. Ein vertikales Wärmerückgewinnungssystem (1) für Abflüsse, das zur Rückgewinnung von Wärme aus Abflusswasser für Leitungswasser geeignet ist, umfassend:

   - ein Außenrohr (2) für Leitungswasser, das einen ersten Leitungswasserkanal (2.1) umfasst, der an einem oberen Abschnitt (10) des Systems (1) angeordnet ist, und einen zweiten Leitungswasserkanal (2.2), der an einem unteren Abschnitt (11) des Systems (1) angeordnet ist;
   - ein Innenrohr (3) für Abflusswasser, das innerhalb des Außenrohrs (2) angeordnet ist,

     wobei das Innenrohr (3) eine gewellte Geometrie umfasst, und wobei das Innenrohr (3) mindestens eine gewellte Wand (3.1) umfasst;
     wobei das Innenrohr (3) ferner eine zweite gewellte Wand (3.2) umfasst;

   - einen ersten Abflusswasserkanal (4), der am oberen Abschnitt (10) des Systems (1) angeordnet ist;
   - einen zweiten Abflusswasserkanal (5), der am unteren Abschnitt (11) des Systems (1) angeordnet ist;
   - mindestens einen Turbulator (6), der an der Außenfläche des Innenrohrs (3) angeordnet ist;
   - mindestens zwei Gewindestifte (8), die im Außenrohr (2) angeordnet sind;

   wobei das System (1) ferner ein Leckageerkennungssystem umfasst, das im oberen Abschnitt (10) oder am unteren Abschnitt (11) angeordnet ist, wobei das Leckageerkennungssystem umfasst:

     ein Dichtungselement (7) zwischen dem ersten Abflusswasserkanal (4) und dem Innenrohr (3) oder ein Dichtungselement (7) zwischen dem zweiten Abflusswasserkanal (5) und dem Innenrohr (3);
     mindestens ein Loch (3.3) an der zweiten gewellten Wand (3.2) des Innenrohrs (3), das oberhalb des Dichtungselements (7) oder unterhalb des Dichtungselements (7) angeordnet ist; und
     einen undichten Wasserkanal (LW), der zwischen dem ersten Abflusswasserkanal (4) und dem Außenrohr (2) oder zwischen dem zweiten Abflusswasserkanal (5) und dem Außenrohr (2) angeordnet ist.

2. Vertikales Wärmerückgewinnungssystem (1) nach Anspruch 1, wobei das Außenrohr (2) ferner einen dritten Leitungswasserkanal (2.3) umfasst, der zwischen dem ersten und dem zweiten Leitungswasserkanal (2.1, 2.2) angeordnet ist.

3. Vertikales Wärmerückgewinnungssystem (1) nach einem der vorhergehenden Ansprüche, wobei das System (1) eine Luftunterbrechung am Abflusssystem (9) umfasst, das am unteren Abschnitt (11) am zweiten Abflusswasserkanal (5) angeordnet ist, und einen Abflusswassereinlass (12), einen Abflusswasserauslass (13) und mindestens einen seitlichen Auslass (14) umfasst.

4. Vertikales Wärmerückgewinnungssystem (1) nach einem der Ansprüche 1 bis 3, wobei die gewellte Geometrie des Innenrohrs (3) eine Wellenform aufweist.

5. Vertikales Wärmerückgewinnungssystem (1) nach einem der Ansprüche 1 bis 3, wobei die gewellte Geometrie des Innenrohrs (3) eine Spiralform aufweist.

6. Vertikales Wärmerückgewinnungssystem (1) nach einem der vorhergehenden Ansprüche, wobei das Innenrohr (3) aus einem Material hergestellt ist, das aus Edelstahl oder Kupfer ausgewählt ist.

7. Vertikales Wärmerückgewinnungssystem (1) nach einem der vorhergehenden Ansprüche, wobei das Außenrohr (2) aus einem Material hergestellt ist, das aus Polyvinylchlorid, Acrylnitril-Butadien-Styrol, Polypropylen, Edelstahl oder Kupfer ausgewählt ist.

8. Vertikales Wärmerückgewinnungssystem (1) nach einem der vorhergehenden Ansprüche, wobei der Turbulator (6) aus Edelstahl, Kupfer oder Polymer hergestellt wird.

9. Vertikales Wärmerückgewinnungssystem (1) nach einem der vorhergehenden Ansprüche, wobei der Turbulator ein C-förmiger Turbulator ist, der Löcher (6.1) umfasst.

10. Vertikales Wärmerückgewinnungssystem (1) nach einem der Ansprüche 1 bis 8, wobei der Turbulator ein spiralförmiger Turbulator (6.2) ist.

11. Verwendung des vertikalen Wärmerückgewinnungssystems (1) wie in einem der Ansprüche 1 bis 10 beschrieben, in einem Abfluss, der mit einer Dusche, einer Badewanne, einer Waschmaschine, einem Pool, einem Spülbecken einem Waschbecken, einem Bidet oder einem Friseurwaschbecken verbunden ist.


**Revendications**

1. Système vertical de récupération de chaleur (1) pour drains, adapté à récupérer la chaleur de l'eau de drainage vers l'eau de réseau, comprenant :

   - un tuyau externe (2) pour l'eau de réseau comprenant un premier passage d'eau de réseau (2.1) disposé dans une section supérieure (10) du système (1), et un deuxième passage d'eau de réseau (2.2) disposé dans une section inférieure (11) du système (1) ;
   - un tuyau interne (3) pour l'eau de drainage disposé à l'intérieur du tuyau externe (2),

      dans lequel le tuyau interne (3) comprend une géométrie ondulée, et
      dans lequel le tuyau interne (3) comprend au moins une paroi ondulée (3.1) ;
      dans lequel le tuyau interne (3) comprend en outre une seconde paroi ondulée (3.2) ;

   - un premier passage d'eau de drainage (4) disposé dans la section supérieure (10) du système (1)
   - un second passage d'eau de drainage (5) disposé dans la section inférieure (11) du système (1) ;
   - au moins un turbulateur (6) disposé sur la surface externe du tuyau interne (3) ;
   - au moins deux boulons (8) disposés dans le tuyau externe (2) ; dans lequel le système (1) comprend en outre un système de détection de fuite disposé dans la section supérieure (10) ou disposé sur la section inférieure (11), le système de détection de fuite comprenant :

      un élément d'étanchéité (7) entre le premier passage d'eau de drainage (4) et le tuyau interne (3), ou un élément d'étanchéité (7) entre le second passage d'eau de drainage (5) et le tuyau interne (3) ;
      au moins un trou (3.3) sur la seconde paroi ondulée (3.2) du tuyau interne (3), disposé au-dessus de l'élément d'étanchéité (7) ou disposé au-dessous de l'élément d'étanchéité (7) ; et
      un canal d'eau fuyante (LW) disposé entre le premier passage d'eau de drainage (4) et le tuyau externe (2) ou disposé entre le second passage d'eau de drainage (5) et le tuyau externe (2).

2. Système vertical de récupération de chaleur (1) selon la revendication 1, dans lequel le tuyau externe (2) comprend en outre un troisième passage d'eau de réseau (2.3) disposé entre les premiers et deuxièmes passages d'eau de réseau (2.1, 2.2).

3. Système vertical de récupération de chaleur (1) selon l'une quelconque des revendications précédentes, dans lequel le système (1) comprend un système de rupture d'air vers l'évacuation (9) disposé dans la section inférieure (11) au niveau du second passage d'eau de drainage (5), et comprend une entrée d'eau de drainage (12), une sortie d'eau de drainage (13) et au moins une sortie de décharge latérale (14).

4. Système vertical de récupération de chaleur (1) selon l'une quelconque des revendications précédentes, dans lequel la géométrie ondulée du tuyau interne (3) est une forme en vague.

5. Système vertical de récupération de chaleur (1) selon l'une quelconque des revendications 1 à 3, dans lequel la géométrie ondulée du tuyau interne (3) est une forme hélicoïdale.

6. Système vertical de récupération de chaleur (1) selon l'une quelconque des revendications précédentes, dans lequel le tuyau interne (3) est constitué d'un matériau choisi parmi l'acier inoxydable ou le cuivre.

7. Système vertical de récupération de chaleur (1) selon l'une quelconque des revendications précédentes, dans lequel le tuyau externe (2) est constitué d'un matériau choisi parmi le polychlorure de vinyle, l'Acrylonitrile Butadiène Styrène, le polypropylène, l'acier inoxydable et le cuivre.

8. Système vertical de récupération de chaleur (1) selon l'une quelconque des revendications précédentes, dans lequel le turbulateur (6) est constitué d'acier inoxydable, de cuivre ou de polymère.

9. Système vertical de récupération de chaleur (1) selon l'une quelconque des revendications précédentes, dans lequel le turbulateur est un turbulateur en forme de C comprenant des trous (6.1).

10. Système vertical de récupération de chaleur (1) selon l'une quelconque des revendications 1 à 8, dans lequel le turbulateur est un turbulateur hélicoïdal (6.2).

11. Utilisation du système vertical de récupération de chaleur (1) décrit dans l'une quelconque des revendications 1 à 10, dans un drain associé à une douche, une baignoire, une machine à laver, une piscine, un évier, un lavabo, un bidet ou un bac de lavage de coiffeur.

Figure 1A          Figure 1B          Figure 1C

Figure 2

Figure 3A

Figure 3B

Figure 4A

Figure 4B

Figure 5A    Figure 5B

Figure 6

Figure 7A                    Figure 7B

Figure 8

Figure 9

Figure 10

Figure 11

Figure 12

Figure 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009060487 A1